# EUROPÄISCHE PATENTSCHRIFT

(11) **EP 3 109 018 B1**
(45) Veröffentlichungstag und Bekanntmachung des Hinweises auf die Patenterteilung: **16.05.2018**
(21) Anmeldenummer: 15173647.7
(22) Anmeldetag: 24.06.2015
(51) Int. Cl.: B26D 7/18, B26F 1/40, B65B 47/04, B65B 61/06, B65B 61/28, B29C 63/00, B65B 31/02

(54) **TIEFZIEHVERPACKUNGSMASCHINE MIT KOMPLETTSCHNITTSTATION UND ENTSPRECHENDES VERFAHREN**
DEEP DRAW PACKAGING MACHINE WITH FULL CUTTING STATION AND CORRESPONDING METHODE
THERMOFORMEUSE DOTÉE D'UNE STATION DE DÉCOUPE COMPLÈTE ET MÉTHODE CORRESPONDANTE

(43) Veröffentlichungstag der Anmeldung: 28.12.2016
(73) Patentinhaber: MULTIVAC Sepp Haggenmüller SE & Co. KG, 87787 Wolfertschwenden (DE)
(72) Erfinder: WEGMANN, Heinz Josef, 87730 Bad Grönenbach (DE)
(74) Vertreter: Grünecker Patent- und Rechtsanwälte PartG mbB

(56) Entgegenhaltungen:
- DE-A1- 2 705 293
- DE-A1-102011 104 823

## Beschreibung

Die Erfindung bezieht sich auf eine Verpackungsmaschine mit den Merkmalen des Anspruchs 1 und auf ein Verfahren mit den Merkmalen des Anspruchs 7.

Aus der DE 30 20 633 und DE 31 18 946 sind Tiefziehverpackungsmaschine bekannt, die Komplettschnittstationen aufweisen, um mehrere Verpackungen aus einem Folienverbund herauszutrennen. Dabei bleiben die geschnittenen Verpackungen auf Stütztellern liegen und werden mittels eines darauf folgenden Vorzug des Restfoliengitters des Folienverbunds aus der Komplettschnittstation heraustransportiert auf ein Transportband, das die Verpackungen aus der Tiefziehverpackungsmaschine heraus- bzw. weitertransportiert. Nachteilig ist dabei, dass die Verpackungen unkontrolliert auf dem Transportband dem folgenden Arbeitsprozess zugeführt werden.

Die DE 10 2011 104 823 A1 offenbart eine Tiefziehverpackungsmaschine mit einen Greifer mit mehreren Vakuumsaugern, um Verpackungen während des Austrennens aus einem Folienverbund mittels einer Komplettschnittstation an der Oberseite der Verpackungen zu halten und anschließend nach unten durch ein Werkzeugunterteil hindurch auf ein Transportband abzulegen. Der gezeigte Greifer ist nur für Verpackungen einsetzbar, die eine Oberfläche der Verpackung aufweisen, die mittels Vakuumsaugern greifbar ist. Verpackungen z.B. mit Skinfolien, die auch überstehende Produkte umfassen können, können nicht verarbeitet werden, da diese keine planen Oberflächen aufweisen.

Die DE 27 05 293 A1 offenbart eine Vorrichtung zum Bilden von geordneten Packungsgruppen aus einem kontinuierlichen Band von Packungen.

Aufgabe der vorliegenden Erfindung ist es, eine verbesserte Tiefziehverpackungsmaschine mit einer Komplettschnittstation bereitzustellen.

Diese Aufgabe wird gelöst durch eine Tiefziehverpackungsmaschine mit den Merkmalen des Anspruchs 1 bzw. durch ein Verfahren zum Betrieb einer solchen Tiefziehverpackungsmaschine mit den Merkmalen des Anspruchs 7. Vorteilhafte Weiterbildungen der Erfindung sind in den Unteransprüchen angegeben.

Die erfindungsgemäße Tiefziehverpackungsmaschine umfasst eine Komplettschnittstation zum zeitgleichen Austrennen von mehreren Verpackungen aus einem Folienverbund und eine Greifeinrichtung zum Abnehmen der Verpackungen von der Komplettschnittstation, wobei die Komplettschnittstation ein Werkzeugoberteil und ein Werkzeugunterteil aufweist. Die erfindungsgemäße Tiefziehverpackungsmaschine zeichnet sich dadurch aus, dass das Werkzeugunterteil eine Aushebevorrichtung für alle während eines Arbeitstaktes ausgetrennten Verpackungen umfasst, um die Verpackungen von der Greifeinrichtung abnehmen und bezüglich ihrer Lage orientiert der weiteren Verarbeitung oder Transport zuführen zu können. Unter "Komplettschnittstation" wird dabei eine Arbeitsstation der Verpackungsmaschine verstanden, die Verpackungen in einem einzigen Arbeitsschritt aus dem Folienverbund heraustrennt.

Dabei ist die Aushebevorrichtung dazu vorgesehen, die Verpackungen wenigstens teilweise über das Werkzeugoberteil hinaus anzuheben, um das Abnehmen der Verpackungen mittels der Greifeinrichtung konstruktiv zu vereinfachen und das Abnehmen von Verpackungen zu ermöglichen, die z.B. nicht mittels Sauggreifern abnehmbar sind, weil ihre Oberfläche reliefartig ist. Durch das Ausheben der Verpackungen nach oben ist der Einsatz von Greifeinrichtungen ermöglicht, die lediglich die Verpackung an ihrem seitlich überstehenden Siegelflansch erfassen können.

Die Greifeinrichtung weist mehrere Greifelemente für jede abzunehmende Verpackung auf, um die Verpackung prozesssicher abzunehmen und dabei die Orientierung, also die Lage der Verpackungen, zueinander beizubehalten. Dabei sind die Greifelemente derart vorgesehen, um die Verpackung an ihrem Siegelrand, der auch als Siegelflansch bezeichnet wird, zu erfassen.

Bevorzugt weist die Aushebevorrichtung für jede auszuhebende Verpackung jeweils einen Pneumatikzylinder und eine Aushebeschale auf. Dabei entspricht die Aushebeschale vorzugsweise wenigstens teilweise der Form eines Verpackungsunterteils, um die Verpackung nach dem Austrennen formschlüssig in der Aushebeschale aufzunehmen. Damit wird eine sichere Lage der Verpackungen während und auch nach dem Anheben gewährleistet.

In einer besonders vorteilhaften Ausführung sind die Pneumatikzylinder stationär an dem Werkzeugunterteil angebracht, um eine konstruktiv einfache Ausführung zu ermöglichen.

In einer besonderen Ausführungsform ist die Komplettschnittstation mehrspurig und/oder mehrreihig ausgeführt, um eine hohe Anzahl von Verpackungen während eines Arbeitstaktes, hier eines Austrennprozesses zu ermöglichen und damit die Leistung der Tiefziehverpackungsmaschine zu erhöhen. Eine Spur von Verpackungen erstreckt sich definitionsgemäß in der Transport- oder Produktionsrichtung der Verpackungsmaschine, eine Reihe quer dazu.

Besonders vorteilhaft ist dabei, wenn einander gegenüberliegende Greifelemente relativ zueinander bewegbar ausgeführt sind, um mittels der Greifeinrichtung sich vertikal von oben den Verpackungen anzunähern und die Verpackungen von der Komplettschnittstation abzunehmen.

Ein erfindungsgemäßes Verfahren zum Betrieb einer Tiefziehverpackungsmaschine, die eine Komplettschnittstation mit einem Werkzeugoberteil und einem Werkzeugunterteil aufweist, wobei mehrere Verpackungen aus wenigstens einer Folienbahn mittels einer Relativbewegung des Werkzeugoberteils und des Werkzeugunterteils zueinander getrennt werden, zeichnet sich dadurch aus, dass nach dem Austrennen der Verpackungen diese mittels einer Aushebevorrichtung nach oben über das Werkzeugoberteil hinaus soweit angehoben werden, dass anschließend eine Greifeinrichtung die Verpackungen abnimmt.

Vorzugsweise hält die Aushebevorrichtung die Verpackungen mittels jeweils einer Aushebeschale solange in einer angehobenen Stellung, bis die Greifeinrichtung die Verpackungen ergriffen hat.

Bevorzugt werden die Aushebeschalen zurück in eine abgesenkte Stellung in das Werkzeugunterteil bewegt, sobald die Greifeinrichtung die Schalen erfasst hat.

Im Folgenden wird ein vorteilhaftes Ausführungsbeispiel der Erfindung anhand einer Zeichnung näher erläutert. Im Einzelnen zeigen:
- Fig. 1: eine schematische Seitenansicht einer erfindungsgemäße Tiefziehverpackungsmaschine,
- Fig. 2: eine zweireihige und dreispurige Komplettschnittstation,
- Fig. 3: eine Seitenansicht in einer Schnittdarstellung längs in Arbeitsrichtung einer Teildarstellung der Komplettschnittstation in einer geöffneten Stellung,
- Fig. 4: die Schnittdarstellung nach dem Austrennvorgang mit einer Greifeinrichtung und
- Fig. 5: die Schnittdarstellung mit ausgefahrenen Ausheberschalen.

Gleiche Komponenten sind in den Figuren durchgängig mit gleichen Bezugszeichen versehen.

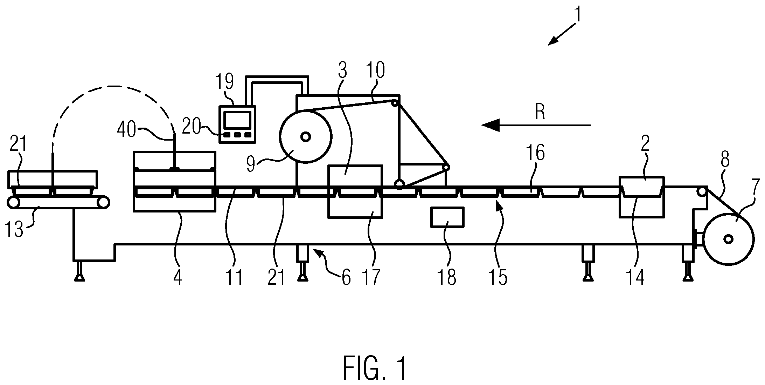

Figur 1 zeigt in schematischer Ansicht eine Tiefziehverpackungsmaschine 1. Diese Tiefziehverpackungsmaschine 1 weist eine Formstation 2, eine Siegelstation 3, eine Komplettschnittstation 4 auf, die in dieser Reihenfolge in einer Arbeitsrichtung R an einem Maschinengestell 6 angeordnet sind. Eingangsseitig befindet sich an dem Maschinengestell 6 eine Zufuhrrolle 7, von der ein erstes bahnförmiges Material 8 abgezogen wird. Im Bereich der Siegelstation 3 ist ein Materialspeicher 9 vorgesehen, von dem ein zweites bahnförmiges Material 10 als Deckelfolie abgezogen wird. Ausgangsseitig ist an der Verpackungsmaschine eine Abfuhreinrichtung 13 in Form eines Transportbandes vorgesehen, mit der fertige, vereinzelte Verpackungen 21 abtransportiert werden. Ferner weist die Verpackungsmaschine 1 eine nicht dargestellte Vorschubeinrichtung auf, die das erste bahnförmige Material 8 ergreift und in einem Hauptarbeitstakt taktweise in der Arbeitsrichtung R weitertransportiert. Die Vorschubeinrichtung kann zum Beispiel durch seitlich angeordnete Transportketten realisiert sein.

In der dargestellten Ausführungsform ist die Formstation 2 als eine Tiefziehstation ausgebildet, in der in dem ersten bahnförmigen Material 8 durch Tiefziehen Behälter 14 geformt werden. Dabei kann die Formstation 2 derart ausgebildet sein, dass in der Richtung senkrecht zur Arbeitsrichtung R mehrere Behälter nebeneinander gebildet werden. Die Maschine ist damit mehrspurig. In Arbeitsrichtung R hinter der Formstation 2 ist eine Einlegestrecke 15 vorgesehen, in der die in dem ersten bahnförmigen Material 8 geformten Behälter 14 mit Produkt 16 befüllt werden.

Die Siegelstation 3 verfügt über eine verschließbare Kammer 17, in der die Atmosphäre in den Behälter 14 vor dem Versiegeln zum Beispiel durch Gasspülen mit einem Austauschgas oder mit einem Austausch-Gasgemisch ersetzt werden kann.

Die Komplettschnittstation 4 trennt in einem einzigen Arbeitsvorgang aus dem Folienverbund 11 des ersten 8 und zweiten bahnförmigen Materials 10 die versiegelten Verpackungen 21 aus und eine Greifeinrichtung 40 nimmt die ausgetrennten Verpackungen 21 von der Komplettschnittstation 4 ab und legt sie auf die Abfuhreinrichtung 13 in Form eines Transportbands ab. Die Ausführung und Funktion der Komplettschnittstation 4 und der Greifeinrichtung 40 wird anhand der nachfolgenden Figuren näher erläutert.

Die Verpackungsmaschine 1 verfügt ferner über eine Steuerung 18. Sie hat die Aufgabe, die in der Verpackungsmaschine 1 ablaufenden Prozesse zu steuern und zu überwachen. Eine Anzeigevorrichtung 19 mit Bedienelementen 20 dient zum Visualisieren bzw. Beeinflussen der Prozessabläufe in der Verpackungsmaschine 1 für bzw. durch einen Bediener.

Die generelle Arbeitsweise der Verpackungsmaschine 1 wird im Folgenden kurz dargestellt.

Das erste bahnförmige Material 8 wird von der Zufuhrrolle 7 abgezogen und durch die Vorschubeinrichtung in die Formstation 2 transportiert. In der Formstation 2 werden durch Tiefziehen Behälter 14 in dem ersten bahnförmigen Material 8 gebildet. Die Behälter 14 werden zusammen mit dem umgebenden Bereich des ersten bahnförmigen Materials 8 in einem Hauptarbeitstakt zu der Einlegestrecke 15 weitertransportiert, in der sie mit Produkt 16 befüllt werden.

Anschließend werden die befüllten Behälter 14 zusammen mit dem sie umgebenden Bereich des ersten bahnförmigen Materials 8 in dem Hauptarbeitstakt durch die Vorschubeinrichtung in die Siegelstation 3 weitertransportiert. Das zweite bahnförmige Material 10 wird als Deckelfolie nach einem Ansiegelvorgang an das erste bahnförmige Material 8 mit der Vorschubbewegung des ersten bahnförmigen Materials 8 weitertransportiert. Dabei wird das zweite bahnförmige Material 10 von dem Materialspeicher 9 abgezogen. Durch das Ansiegeln der Deckelfolie 10 an die Behälter 14 entstehen verschlossene Verpackungen 21. Die intermittierend arbeitende Vorschubeinrichtung transportiert den Folienverbund 11 mit den Verpackungen 21 in Arbeitsrichtung R der Komplettschnittstation 4 zu.

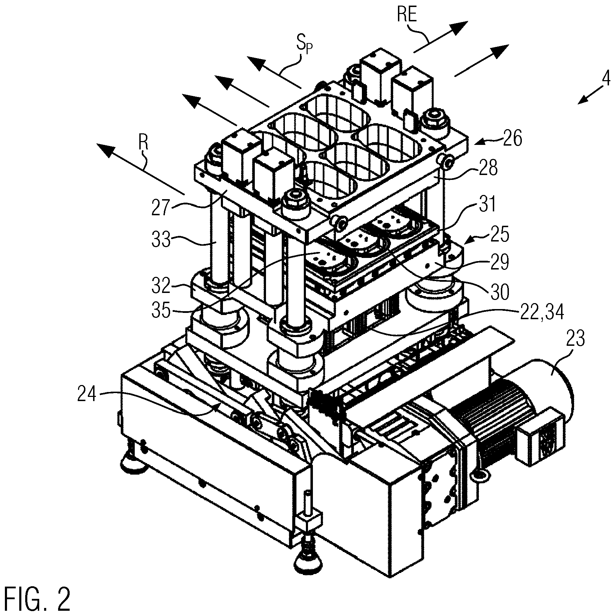

Fig. 2 zeigt eine zweireihige und dreispurige Komplettschnittstation 4, wobei die Anzahl von Spuren SP in der Arbeitsrichtung R und die Anzahl Reihen RE quer zur Arbeitsrichtung R definiert wird. In diesem gezeigten Beispiel ergibt sich ein Format bzw. eine Gruppe von sechs Verpackungen 21, nämlich drei Verpackungen 21 pro Reihe RE oder zwei Verpackungen 21 pro Spur SP, die gleichzeitig während eines Arbeitstaktes der Komplettschnittstation 4 aus einem Folienverbund 11, umfassend das erste 8 und zweite bahnförmige Material 10, herausgetrennt werden.

Die Komplettschnittstation 4 umfasst einen Servoantrieb 23 und eine von diesem angetriebene Hubmechanik 24, um ein Werkzeugunterteil 25 nach oben gegen ein Werkzeugoberteil 26 anzuheben. Dabei kann auch das Werkzeugoberteil 26 nach unten an den Folienverbund 11 bewegt werden. Das Werkzeugoberteil 26 umfasst eine Grundplatte 27 und eine unten an der Grundplatte 27 angebrachte Schnittplatte 28. Das Werkzeugunterteil 25 umfasst eine Trägerplatte 29 und eine oben auf der Trägerplatte 29 angeordnete Stempelplatte 30 sowie eine oben auf der Trägerplatte 29 angeordnete und die Stempelplatte 30 umrahmende Klemmplatte 31. Das Werkzeugunterteil 25 ist mittels Lagerungen 32 an vier Säulen 33 geführt. Das Werkzeugoberteil 26 ist selbst mit den vier Säulen 33 fest verbunden und wird durch eine gemeinsame synchrone Bewegung der Säulen 33 vertikal über die Hubmechanik 24 bewegt.

Am Werkzeugunterteil 25 ist eine Aushebevorrichtung 22 mit sechs Pneumatikzylindern 34 vorgesehen, die unten an der Trägerplatte 29 angebracht sind, um jeweils eine Ausheberschale 35 für jede aufzunehmende Verpackung 21 nach oben durch die Stempelplatte 30 und durch das Werkzeugoberteil 26 anzuheben.

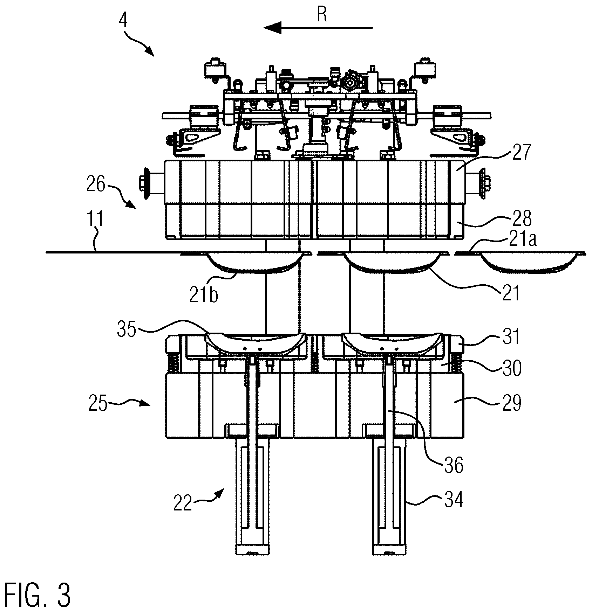

Fig. 3 zeigt eine Seitenansicht in einer Schnittdarstellung längs in Arbeitsrichtung R einer Teildarstellung der zweireihigen Komplettschnittstation 4 in einer geöffneten Stellung. Dabei befinden sich die Pneumatikzylinder 34 mit ihren Kolbenstangen 36 in einer zusammengefahrenen Stellung. Die Ausheberschalen 35 sind am oberen Ende der Kolbenstange 36 angebracht. Der Folienverbund 11 wird mittels einer nicht näher dargestellten Vorschubeinrichtung, beispielsweise in Form von zwei seitlich in Arbeitsrichtung R vorgesehenen Klammerketten, intermittierend pro Takt um jeweils zwei Verpackungen 21 in Arbeitsrichtung R transportiert. Der Folienverbund 11 ist stromabwärts der Komplettschnittstation 4 ein Restfoliengitter. Die Verpackung 21 weist einen horizontalen Rand 21a und ferner ein Verpackungsunterteil 21b auf, das sich unterhalb der Ebene des Folienverbunds 11 befindet und dem in der Formstation 2 geformten Behälter 14 aus Fig. 1 entspricht.

Um die Verpackungen 21 aus dem Folienverbund 11, der der Komplettschnittstation 4 zugeführt wurde, herauszutrennen, werden sowohl das Werkzeugunterteil 25 nach oben als auch das Werkzeugoberteil 26 nach unten an den Folienverbund 11 heranbewegt.

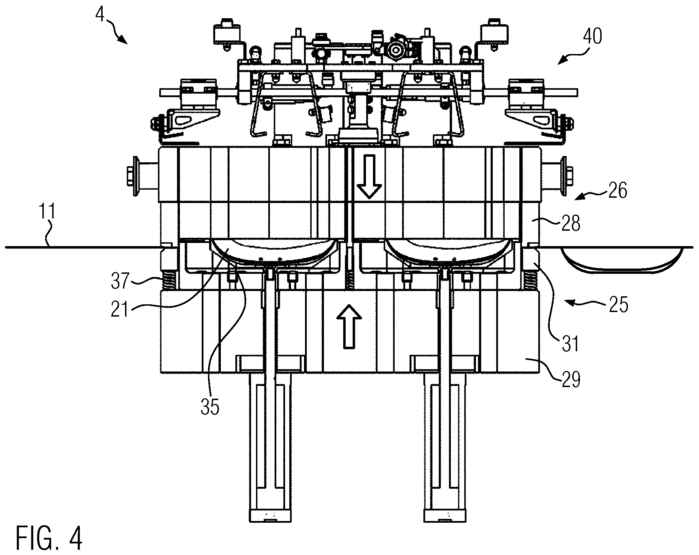

Fig. 4 zeigt die Schnittdarstellung der Komplettschnittstation 4 nach dem Austrennvorgang, jetzt mit der Greifeinrichtung 40, die sich oberhalb des Werkzeugoberteils 26 befindet. Beim Kontakt des Werkzeugunterteils 25 und des Werkzeugoberteils 26 wird der Folienverbund 11 zwischen dem Klemmrahmen 31 und der Schnittplatte 28 ringsum geklemmt. Der Klemmrahmen 31 ist selbst mittels einer Vielzahl von Federn 37 gefedert an der Trägerplatte 29 vorgesehen. Für den Austrennvorgang wird die Stempelplatte 30 nach oben in die Schnittplatte 28 bewegt und dabei werden die Verpackungen 21 an deren Außenkante aus dem Folienverbund 11 ausgetrennt. Dabei macht der Klemmrahmen 31 eine Relativbewegung an die Trägerplatte 29 heran. Die Ausheberschalen 35 sind direkt an der Verpackung 21 oder nur wenige Millimeter darunter vorgesehen, um die Verpackungen 21 aufzunehmen. Die Ausheberschalen 35 sind wenigstens teilweise mit dem unter dem Folienverbund 11 befindlichen Teil 21b der Verpackung 21 kongruent, um ein Verdrehen oder Verkippen der Verpackung 21 innerhalb der Ausheberschale 35 zu verhindern oder zu minimieren.

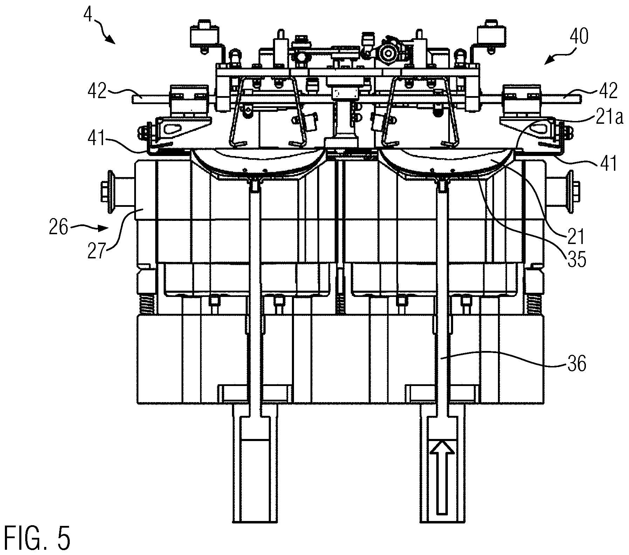

Fig. 5 zeigt die Schnittdarstellung mit ausgefahrenen Ausheberschalen 35, damit die Greifeinheit 40 die Verpackungen 21 aufnehmen kann. In dieser Stellung der Komplettschnittstation 4 sind die Kolbenstangen 36 komplett ausgefahren und die Ausheberschalen 35 haben die Verpackungen 21 zumindest teilweise über die Grundplatte 27 und damit über das Werkzeugoberteil 26 soweit angehoben, dass Greifelemente 41 der Greifeinrichtung 40 an mehreren Seiten unterhalb des Rands 21a der Verpackungen 21 geschoben und die Verpackungen 21 damit durch die Greifeineinrichtung 40 angehoben werden können.

Bei den Greifelementen 41 handelt es sich hier um Greiferbacken. Jeweils einander gegenüberliegende und damit einander zugeordnete Paare von Greifelementen sind relativ zueinander bewegbar. Im dargestellten Ausführungsbeispiel sind die Greifelemente zu diesem Zweck gegenläufig horizontal verschiebbar entlang von Horizontalführungen 42.

## Patentansprüche

1. Tiefziehverpackungsmaschine (1), umfassend eine Formstation (2), eine Einlegestrecke (15), eine Siegelstation (3) sowie eine Komplettschnittstation (4) zum zeitgleichen Austrennen von mehreren Verpackungen (21) aus einem Folienverbund (11) und eine Greifeinrichtung (40) zum Abnehmen der Verpackungen (21) von der Komplettschnittstation (4), wobei die Komplettschnittstation (4) ein Werkzeugoberteil (26) und ein Werkzeugunterteil (25) aufweist, **dadurch gekennzeichnet, dass** das Werkzeugunterteil (25) eine Aushebevorrichtung (22) für alle während eines Arbeitstaktes aus dem Folienverbund (11) ausgetrennten Verpackungen (21) umfasst, wobei die Aushebevorrichtung (22) dazu vorgesehen ist, die Verpackungen (21) wenigstens teilweise über das Werkzeugoberteil (26) hinaus anzuheben,
dass die Greifeinrichtung (40) mehrere Greifelemente (41) für jede abzunehmende Verpackung (21) aufweist,
und dass die Greifelemente (41) dazu konfiguriert sind, die Verpackung (21) an ihrem Siegelrand (21a) zu erfassen.

2. Tiefziehverpackungsmaschine nach einem Anspruch 1, **dadurch gekennzeichnet, dass** die Aushebevorrichtung (22) für jede auszuhebende Verpackung (21) jeweils einen Pneumatikzylinder (34) und eine Aushebeschale (35) aufweist.

3. Tiefziehverpackungsmaschine nach Anspruch 2, **dadurch gekennzeichnet, dass** die Aushebeschale (35) wenigstens teilweise der Form eines Verpackungsunterteils (21b) entspricht, um die Verpackung (21) nach dem Austrennen formschlüssig in der Aushebeschale (35) aufzunehmen.

4. Tiefziehverpackungsmaschine nach Anspruch 2 oder 3, **dadurch gekennzeichnet, dass** die Pneumatikzylinder (34) stationär an dem Werkzeugunterteil (25) angebracht sind.

5. Tiefziehverpackungsmaschine nach einem der vorangehenden Ansprüche, **dadurch gekennzeichnet, dass** die Komplettschnittstation (4) mehrspurig und/oder mehrreihig ausgeführt ist.

6. Tiefziehverpackungsmaschine nach einem der vorangehenden Ansprüche, **dadurch gekennzeichnet, dass** gegenüberliegende Greifelemente (41) relativ zueinander bewegbar ausgeführt sind.

7. Verfahren zum Betrieb einer Tiefziehverpackungsmaschine (1), die eine Formstation (2), eine Einlegestrecke (15), eine Siegelstation (3) sowie eine Komplettschnittstation (4) mit einem Werkzeugoberteil (26) und einem Werkzeugunterteil (25) umfasst, wobei mehrere Verpackungen (21) gleichzeitig aus einem Folienverbund (11) mittels einer Relativbewegung des Werkzeugoberteils (26) und des Werkzeugunterteils (25) zueinander getrennt werden, **dadurch gekennzeichnet, dass** nach dem Austrennen der Verpackungen (21) aus dem Folienverbund (11) diese mittels einer Aushebevorrichtung (22) nach oben über das Werkzeugoberteil (26) hinaus soweit angehoben werden, dass anschließend eine Greifeinrichtung (40) die Verpackungen (21) abnimmt,
wobei die Greifeinrichtung (40) mehrere Greifelemente (41) für jede abzunehmende Verpackung (21) aufweist, und wobei die Greifelemente (41) die Verpackung (21) an ihrem Siegelrand (21a) erfassen.

8. Verfahren nach Anspruch 7, **dadurch gekennzeichnet, dass** die Aushebevorrichtung (22) die Verpackungen (21) mittels jeweils einer Aushebeschale (35) solange in einer angehobenen Stellung hält, bis die Greifeinrichtung (40) die Verpackungen (21) ergriffen hat.

9. Verfahren nach Anspruch 8, **dadurch gekennzeichnet, dass** die Aushebeschalen (35) zurück in eine abgesenkte Stellung in das Werkzeugunterteil (25) bewegt werden, sobald die Greifeinrichtung (40) die Schalen (21) erfasst hat.

## Claims

1. Thermoforming packaging machine (1) comprising a forming station (2), a filling section (15), a sealing station (3) as well as a complete cutting station (4) for simultaneously separating several packagings (21) from a foil composite (11), and a gripping unit (40) for taking the packages (21) from the complete cutting station (4), wherein the complete cutting station (4) comprises a tool upper part (26) and a tool lower part (25),
**characterized in that**
the tool lower part (25) comprises a lifting device (22) for all packagings (21) separated within one working cycle from the foil composite (11), and wherein the lifting device (22) is configured to lift the packagings (21) at least partially beyond the tool upper part (26),
**in that** the gripping unit (40) comprises several gripping elements (41) for each packaging (21) to be taken,
and **in that** the gripping elements (41) are configured to grip the packagings (21) at their sealing flange (21a).

2. Thermoforming packaging machine according to claim 1, **characterized in that** the lifting device (22) comprises a pneumatic cylinder (34) and a lifting tray (35) for each packaging (21) to be lifted.

3. Thermoforming packaging machine according to claim 2, **characterized in that** the lifting tray (35) at least partially corresponds to the shape of a lower portion (21b) of the packaging, in order to accommodate the packaging (21) in a formfit manner in the lifting tray (35) after separating the packaging.

4. Thermoforming packaging machine according to claim 2 or 3, **characterized in that** the pneumatic cylinders (34) are mounted in a stationary way at the tool lower part (25).

5. Thermoforming packaging machine according to any of the preceding claims, **characterized in that** the complete cutting station (4) is configured for multiple lanes and/or multiple rows.

6. Thermoforming packaging machine according to any of the preceding claims, **characterized in that** mutually opposing gripper elements (41) are relatively movable with respect to each other.

7. Method for operating a thermoforming packaging machine (1), which comprises a forming station (2), a filling section (15), a sealing station (3) as well as a complete cutting station (4) having a tool upper part (26) and a tool lower part (25), wherein a plurality of packagings (21) are simultaneously separated from a foil composite (11) by means of a relative movement of the tool upper part (26) and the tool lower part (25) with respect to each other, **characterized in that,** after separating the packagings (21) from the foil composite (11), the packagings are lifted by a lifting device (22) upwards beyond the tool upper part (26) by such a distance that subsequently a gripping unit (40) takes up the packagings (21),
wherein the gripping unit (40) comprises several gripping elements (41) for each packaging (21) to be taken up, and wherein the gripping elements (41) grip the packaging (21) at its sealing flange (21a).

8. Method according to claim 7, **characterized in that** the lifting device (22) maintains each packaging (21) in a lifting tray (35) in a lifted position until the gripping unit (40) grips the packagings (21).

9. Method according to claim 8, **characterized in that** the lifting trays (35) are moved back into a lower position within the tool lower part (25) as soon as the gripping unit (40) grips the packagings (21).

## Revendications

1. Machine d'emballage par emboutissage ou thermoformage (1) comprenant un poste de formage (2), un parcours de dépose d'alimentation (15), un poste de scellage (3) ainsi qu'un poste de découpage complet (4), pour séparer simultanément plusieurs emballages (21) d'un ensemble de feuille (11), et un dispositif de préhension (40) pour prélever les emballages (21) du poste de découpage complet (4), le poste de découpage complet (4) comportant une partie supérieure d'outillage (26) et une partie inférieure d'outillage (25), **caractérisée en ce que** la partie inférieure d'outillage (25) comprend un dispositif de soulèvement d'éjection (22) pour tous les emballages (21) séparés de l'ensemble de feuille (11), le dispositif de soulèvement d'éjection (22) étant prévu pour soulever les emballages (21) au moins partiellement au-dessus de la partie supérieure d'outillage (26),
**en ce que** le dispositif de préhension (40) comprend plusieurs éléments de préhension (41) pour chaque emballage (21) à prélever,
et **en ce que** les éléments de préhension (41) sont configurés pour saisir l'emballage (21) par son bord de scellage (21a).

2. Machine d'emballage par emboutissage ou thermoformage selon la revendication 1, **caractérisée en ce que** le dispositif de soulèvement d'éjection (22) comprend pour chaque emballage (21) à éjecter par soulèvement, respectivement un vérin pneumatique (34) et une coupelle de soulèvement d'éjection (35).

3. Machine d'emballage par emboutissage ou thermoformage selon la revendication 2, **caractérisée en ce que** la coupelle de soulèvement d'éjection (35) correspond au moins partiellement à la forme d'une partie inférieure d'emballage (21b), en vue d'accueillir l'emballage (21), après la séparation, par complémentarité de formes, dans la coupelle de soulèvement d'éjection (35).

4. Machine d'emballage par emboutissage ou thermoformage selon la revendication 2 ou la revendication 3, **caractérisée en ce que** les vérins pneumatiques (34) sont montés de manière stationnaire sur la partie inférieure d'outillage (25)

5. Machine d'emballage par emboutissage ou thermoformage selon l'une des revendications précédentes, **caractérisée en ce que** le poste de découpage complet (4) est d'une configuration à voies multiples et/ou à rangées multiples.

6. Machine d'emballage par emboutissage ou thermoformage selon l'une des revendications précédentes, **caractérisée en ce que** des éléments de préhension (41) mutuellement opposés sont mobiles les uns par rapport aux autres.

7. Procédé pour assurer le fonctionnement d'une machine d'emballage par emboutissage ou thermoformage (1) comprenant un poste de formage (2), un parcours de dépose d'alimentation (15), un poste de scellage (3) ainsi qu'un poste de découpage complet (4) comportant une partie supérieure d'outillage (26) et une partie inférieure d'outillage (25), plusieurs emballages (21) étant séparés simultanément d'un ensemble de feuille (11) moyennant un mouvement relatif de la partie supérieure d'outillage (26) et de la partie inférieure d'outillage (25) l'une par rapport à l'autre, **caractérisé en ce qu'**après la séparation des emballages (21) de l'ensemble de feuille (11), ceux-ci sont soulevés vers le haut, au-dessus de la partie supérieure d'outillage (26), par un dispositif de soulèvement d'éjection (22), de façon suffisante pour qu'un dispositif de préhension (40) prélève ensuite les emballages (21),
le dispositif de préhension (40) comprenant plusieurs éléments de préhension (41) pour chaque emballage (21) à prélever, et les éléments de préhension (41) saisissant l'emballage (21) par son bord de scellage (21a).

8. Procédé selon la revendication 7, **caractérisé en ce que** le dispositif de soulèvement d'éjection (22) maintient respectivement chacun des emballages (21) au moyen d'une coupelle de soulèvement d'éjection (35) respective, dans une position soulevée, jusqu'à ce que le dispositif de préhension (40) ait saisi les emballages (21).

9. Procédé selon la revendication 8, **caractérisé en ce que** les coupelles de soulèvement d'éjection (35) sont ramenées dans une position abaissée, dans la partie inférieure d'outillage (25), dès que le dispositif de préhension (40) a saisi les barquettes (21).
